# FASCICULE DE BREVET EUROPEEN

(11) **EP 4 355 260 B1**
(45) Date de publication et mention de la délivrance du brevet: **05.08.2026**
(21) Numéro de dépôt: 22740432.4
(22) Date de dépôt: 14.06.2022
(51) Int. Cl.: A61D 7/00, A61D 7/04, A01K 13/00, A01K 15/02

(54) **ACCESSOIRE APAISANT POUR ANIMAL COMPORTANT UN SYSTÈME DE COMMANDE**
ZUBEHÖR FÜR EIN TIER MIT EINEM SYSTEM ZUR STEUERUNG
A SOOTHING ACCESSORY FOR AN ANIMAL WITH SYSTEM FOR CONTROLLING

(30) Priorité: 16.06.2021 FR 2106393
(43) Date de publication de la demande: 24.04.2024
(73) Titulaire: AB7 Santé, 31450 Deyme (FR)
(72) Inventeur: CALMET, Christophe, 31560 Gibel (FR); NGUYEN, David, 31400 Toulouse (FR); VILBERT, Arnaud, 31450 Baziège (FR)
(86) Numéro de dépôt international: PCT/FR2022/000056
(87) Numéro de publication internationale: WO 2022/263730

(56) Documents cités:
- WO-A1-2020/074796
- WO-A1-2020/086590

## Description

La présente invention se rapporte à un accessoire comprenant un système de commande

Comme la plupart des animaux, les chiens ressentent le stress qui est une réaction naturelle, notamment devant un danger ou une situation inconnue. Le stress du chien peut le pousser à adopter un comportement spécifique, et l'aider face à une menace.

Toutefois, lorsque le stress est trop important, il peut rapidement induire un trouble du comportement, comme la perte de propreté, des aboiements inappropriés ou des destructions matérielles.

Il est donc souhaitable de pouvoir apaiser un chien en canalisant son anxiété ou en le calmant.

En pratique, un chien manifeste son stress par différents signes, parmi lesquels l'hypersalivation, les tremblements, la dilatation pupillaire ou les troubles digestifs. Ces symptômes sont difficiles à identifier, d'une part parce que le stress peut être normal et d'autre part parce que ces symptômes sont relativement courants et peuvent se manifester en l'absence d'une personne (maître parti au travail).

Aussi, il est difficile pour un maître de réaliser que son chien a besoin d'être apaisé.

Des problématiques similaires se posent pour les autres animaux domestiques.

Il existe donc un besoin pour un système de commande d'un accessoire pour animal qui permette de mieux détecter l'état d'un animal et analyser son comportement et de déterminer comment apaiser au mieux l'animal en temps réel.

A cet effet, la description décrit un système de commande d'un accessoire pour animal,
l'accessoire comportant :
   - un dispositif rechargeable de pulvérisation d'un actif comprenant un réservoir d'actif et un corps de nébulisation avec un mécanisme de pulvérisation commandable,
   - un ensemble d'au moins un capteur, l'ensemble d'au moins un capteur étant propre à acquérir des mesures relatives à l'animal portant l'accessoire ou à son environnement,
ledit système de commande comprenant :
   - une unité de réception propre à recevoir des données, lesdites données reçues par l'unité de réception comprenant des premières données acquises par l'ensemble d'au moins un capteur,
   - une unité de détermination propre à déterminer une loi de commande du mécanisme de pulvérisation en fonction des données reçues, pour obtenir une loi de commande déterminée, l'unité de détermination étant propre à déterminer la loi de commande par sélection d'un mode de fonctionnement parmi une pluralité de modes de fonctionnement, chaque mode de fonctionnement étant une loi de commande codant pour un nombre d'activations du mécanisme de pulvérisation durant une durée prédéterminée et une durée pour chaque activation, le nombre d'activations et la durée de chaque activation étant propres à chaque mode de fonctionnement, et
   - une unité d'envoi propre à envoyer la loi de commande déterminée au mécanisme de pulvérisation.

Par rapport au document WO 2020/074796 A1 qui décrit un dispositif automatisé pour la pulvérisation ciblée de matière active, un tel système de commande est un système autonome et adaptatif.

En effet, le système de commande permet d'ajuster les modes de fonctionnement du mécanisme de pulvérisation, et par là la posologie, au comportement de l'animal à l'aide d'au moins un capteur.

Le système de commande est ainsi capable de provoquer le basculement des modes de fonctionnement du mécanisme de pulvérisation en fonction de mesures effectuées sur l'animal pour assurer une bonne adaptation de la posologie de l'animal.

Autrement formulé, le système de commande est capable de déterminer comment apaiser au mieux l'animal en temps réel et de commander le dispositif de pulvérisation pour appliquer le traitement.

Par rapport au document US 2020/108408 A1 qui décrit un dispositif de dispersion d'un agent chimique contrôlé numériquement, le système de commande est adaptatif au sens où il propose des modes de fonctionnement adaptés en termes de durée et de périodicité et non un choix entre une application d'agent chimique ou aucune application de cet agent chimique.

Le système de commande est, en outre, un système permettant d'obtenir à la fois un traitement sur le long terme et un traitement sur le court terme.

Selon des modes de réalisation particuliers, le système de commande présente une ou plusieurs des caractéristiques suivantes, prise(s) isolément ou selon toutes les combinaisons techniquement possibles :
- l'ensemble des capteurs comporte une unité de mesure du mouvement comportant au moins un élément parmi un accéléromètre ou un gyroscope, les premières données comprenant une propriété d'un mouvement de l'animal, la propriété étant choisie parmi l'amplitude du mouvement de l'animal, la fréquence du mouvement de l'animal, la distance effectuée par l'animal, la direction du mouvement de l'animal ou la durée du mouvement de l'animal.
- l'ensemble des capteurs comporte un microphone, les premières données comprenant une propriété d'un son enregistré par le microphone, la propriété étant choisie parmi l'intensité acoustique du son, la fréquence sonore du son ou la durée du son.
- les modes de fonctionnement comportent des modes de fonctionnement principaux, par exemple supérieur ou égal à 3, et au moins un mode de fonctionnement secondaire, un mode de fonctionnement principal étant un mode de fonctionnement pour lequel la durée prédéterminée est supérieure à 100 fois la durée d'une activation et un mode de fonctionnement secondaire étant un mode de fonctionnement pour lequel la durée prédéterminée est inférieure à 5 fois la durée d'une activation.
- l'unité de détermination est propre à déterminer si un critère portant sur les premières données est vérifié et est propre à sélectionner un mode de fonctionnement secondaire lorsque ledit critère est vérifié.
- l'unité de détermination est propre à compter le nombre de sélections d'un mode de fonctionnement secondaire durant une durée de comptage, l'unité de détermination basculant d'un mode de fonctionnement principal à un autre mode de fonctionnement principal en fonction du nombre de sélections comptées.
- chaque durée prédéterminée associée à un mode de fonctionnement principal et la durée de comptage sont identiques.
- les données reçues par l'unité de réception comprennent des deuxièmes données, les deuxièmes données étant des informations relatives à l'animal, l'unité de détermination étant propre à initialiser la loi de commande à un mode de fonctionnement principal sélectionné en fonction des deuxièmes données.
- les données reçues par l'unité de réception comprennent une troisième donnée relative à une activation manuelle d'un bouton, l'unité de détermination sélectionnant alors un mode de fonctionnement secondaire en fonction de la troisième donnée. La description porte également sur un accessoire pour animal comportant :
   - un dispositif rechargeable de pulvérisation d'un actif comprenant un réservoir d'actif et un corps de nébulisation avec un mécanisme de pulvérisation commandable,
   - un ensemble d'au moins un capteur, l'ensemble d'au moins un capteur étant propre à acquérir des mesures relatives à l'animal portant l'accessoire ou à son environnement, et
   - un système de commande tel que précédemment décrit.

La description décrit aussi sur un procédé de commande d'un accessoire pour animal comportant :
- un dispositif rechargeable de pulvérisation d'un actif comprenant un réservoir d'actif et un corps de nébulisation avec un mécanisme de pulvérisation commandable,
- un ensemble d'au moins un capteur, l'ensemble d'au moins un capteur étant propre à acquérir des mesures relatives à l'animal portant l'accessoire ou à son environnement,
le procédé de commande étant mis en oeuvre par un système de commande et comprenant les étapes de :
- réception des données, les données reçues comprenant des premières données, les premières données étant des données acquises par l'ensemble d'au moins un capteur,
- détermination d'une loi de commande du mécanisme de pulvérisation en fonction des données reçues, pour obtenir une loi de commande déterminée, l'étape de détermination comprenant la sélection d'un mode de fonctionnement parmi une pluralité de modes de fonctionnement, chaque mode de fonctionnement étant une loi de commande codant pour un nombre d'activations du mécanisme de pulvérisation durant une durée prédéterminée et une durée pour chaque activation, le nombre d'activations et la durée de chaque activation étant propres à chaque mode de fonctionnement, et
- envoi de la loi de commande déterminée au mécanisme de pulvérisation.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue schématique d'un accessoire d'un animal et d'un système de commande, et
- la figure 2 est une représentation schématique d'un exemple d'un ordinogramme d'un procédé de commande mis en oeuvre par le système de commande.

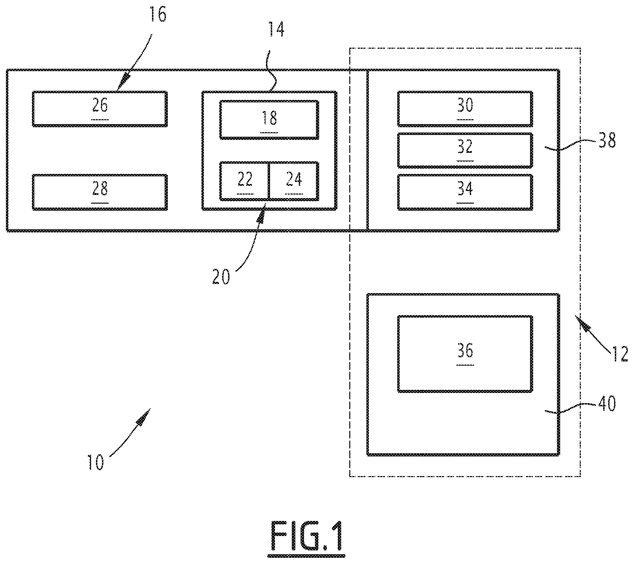

Un accessoire 10 d'animal et un système de commande 12 sont représentés sur la figure 1.

Un accessoire 10 est un élément destiné à être porté par une partie du corps d'un animal.

Dans l'exemple décrit, l'accessoire 10 est un collier, c'est-à-dire un élément destiné à être porté autour du cou d'un animal.

En variante, il peut également être envisagé comme accessoire un harnais, une ceinture ou encore un bracelet.

L'animal est un animal domestique, notamment un chat ou un chien.

L'accessoire 10 comporte un dispositif de pulvérisation 14 et un ensemble 16 de capteurs.

Le dispositif de pulvérisation 14 est un dispositif de pulvérisation d'un actif.

Un dispositif de pulvérisation 14 est propre à projeter un nuage de gouttelettes d'un actif. Les gouttelettes pulvérisées sont relativement fines, typiquement présentent une taille comprise entre 1 micromètre (µm) et 20 µm, de préférence entre 1 µm et 10 µm.

Le dispositif de pulvérisation 14 permet de pulvériser l'actif de façon localisée sur une zone spécifique de l'animal, et notamment l'organe voméronasal (plus souvent dénommé organe de Jacobson).

Le dispositif de pulvérisation 14 est également utilisable de façon multidirectionnelle et indépendamment des mouvements du sujet. Ainsi, le dispositif de pulvérisation 14 est capable de pulvériser de façon efficace un actif peu importe l'orientation du dispositif de pulvérisation 14 et les mouvements qui lui sont imposés.

Pour cela, le dispositif de pulvérisation 14 comprend un réservoir 18 d'actif et un corps de nébulisation 20 avec un mécanisme de pulvérisation 22 commandable.

Le réservoir d'actif 18 peut être une cartouche remplissable et réutilisable ou encore une cartouche jetable après utilisation.

Selon l'exemple décrit, le réservoir 18 est inclus dans une cartouche à changer.

Cela permet d'obtenir un dispositif de pulvérisation 14 rechargeable, c'est-à-dire un dispositif pouvant être rempli à nouveau après utilisation lorsque le réservoir 18 est vide.

En variante, le réservoir 18 comporte une valve de remplissage directement intégrée en surface du réservoir 18.

Le corps de nébulisation 20 est propre à nébuliser l'actif liquide en un nuage de gouttelettes.

Pour cela, le corps de nébulisation 20 comporte de multiples éléments parmi lesquels le mécanisme de pulvérisation 22.

Le mécanisme de pulvérisation 22 est commandable.

Cela signifie qu'une loi de commande permet l'activation du mécanisme de pulvérisation 22. La loi de commande permet ainsi de contrôler et/ou de déclencher la pulvérisation à distance de l'actif.

Selon l'exemple décrit, lorsque la loi de commande déclenche la pulvérisation d'un actif par le mécanisme de pulvérisation 22, celui-ci délivre une quantité de liquide qui dépend uniquement de la durée de la pulvérisation, le débit étant fixé par le mécanisme de pulvérisation 22.

Un mécanisme de pulvérisation piézoélectrique est un exemple de mécanisme de pulvérisation 22 pouvant être ainsi commandé.

Un mécanisme de pulvérisation piézoélectrique est un mécanisme comprenant une pastille piézoélectrique en contact avec l'actif, ladite pastille vibrant à une fréquence permettant la nébulisation.

Avantageusement, le corps de nébulisation 20 est équipé d'un système d'orientation 24 du mécanisme de pulvérisation 22 piézolélectrique pour permettre de bien pulvériser l'actif dans la zone souhaitée.

L'actif est une substance formulée au sein d'une composition liquide pour pouvoir entrer en contact avec le dispositif piézoélectrique dont la fréquence de vibration va permettre d'atomiser le liquide et de disperser la substance sous forme de nuage ou de brume.

La composition liquide contenant l'actif est de type aqueuse, alcoolique, hydroalcoolique, huileuse ou sous forme d'émulsion, dont la nature sera adaptée à l'actif.

Selon un mode de réalisation particulier, la composition est exclusivement composée de l'actif pur, sans solvant.

Selon un autre mode de réalisation, l'actif est dilué au sein de la composition au moyen d'au moins un solvant. Des exemples de solvants utilisables comprennent notamment des hydrocarbures aromatiques ou aliphatiques, des hydrocarbures halogénés, des alcools aromatiques ou aliphatiques, des esters, des éthers et des cétones, ou de l'eau. Plus préférentiellement, les solvants utilisables sont des triglycérides, tels les huiles végétales ou animales, ou des solvants alcooliques, tel l'éthanol.

Des adjuvants de formulation, peuvent également être ajoutés tels que, par exemple, des stabilisants, des tensioactifs, des agents synergisants, des agents antimicrobiens.

L'actif représente entre 0,01 % et 100% de la composition liquide, préférentiellement entre 0,1 % et 50 % et encore plus préférentiellement entre 0,5 % et 30%.

Ici, l'actif est un antistress ou un agent apaisant.

A titre d'exemple, l'antistress ou l'agent apaisant est une huile végétale telle que l'huile de chanvre, ou une huile essentielle telle que l'huile essentielle de valériane, de nepeta cataria, de pin, de mandarine, de bigaradier, de verveine, de ravintsara, de camomille, de lavande, de marjolaine, d'Ylang-ylang, de romarin, d'eucalyptus, de menthe, ou une huile de cannabinoïdes sans tétrahydrocannabinol (THC), de type huile de cannabidiol (CBD) sans THC, ou leurs mélanges. L'antistress ou l'agent apaisant peut également être un composé ou mélange de type phéromone apaisante, telles, mais non exclusivement, les phéromones apaisantes de chat ou de chien.

Selon l'exemple décrit à la figure 1, l'ensemble 16 de capteurs comporte deux capteurs qui sont une unité de mesure du mouvement 26 et un microphone 28.

Une unité de mesure du mouvement 26 est une unité propre à acquérir au moins une propriété du mouvement de l'animal.

L'unité de mouvement 26 permet d'obtenir une propriété dudit mouvement pour analyser le comportement de l'animal, typiquement un comportement anxieux.

A titre d'illustration, l'unité de mesure du mouvement 26 comporte ici un accéléromètre et un gyroscope mais pourrait comporter seulement l'un des deux ou comporter d'autres capteurs permettant d'enregistrer d'autres paramètres liés aux mouvements ou comportement de l'animal.

En effet, l'unité de mesure du mouvement 26 est propre à acquérir une propriété choisie parmi l'amplitude du mouvement de l'animal, la fréquence du mouvement de l'animal, la distance effectuée par l'animal, la direction du mouvement de l'animal ou la durée du mouvement de l'animal.

Un microphone est un capteur de sons. Aussi, le microphone 28 est, dans l'exemple décrit, propre à mesurer une propriété relative à son environnant, la propriété étant choisie parmi l'intensité acoustique du son, la fréquence sonore du son ou la durée du son.

Le système de commande 12 est propre à commander l'accessoire 10 et en particulier le mécanisme de pulvérisation 22.

Le système de commande 12 fait partie de l'accessoire 10. En ce sens, le système de commande 12 est un système de commande 12 d'un accessoire.

Le système de commande 12 comprend une unité de réception 30, une unité de détermination 32, une unité d'envoi 34 et une interface homme-machine 36.

L'unité de réception 30 est propre à recevoir des données.

Selon l'exemple décrit, les données reçues par l'unité de réception 30 comprennent les données provenant de l'ensemble 16 de capteurs.

L'unité de détermination 32 est propre à déterminer une loi de commande du mécanisme de pulvérisation 22 en fonction des données reçues.

L'unité de détermination 32 obtient ainsi une loi de commande déterminée.

L'unité d'envoi 34 est propre à envoyer la loi de commande déterminée au mécanisme de pulvérisation 22.

L'interface homme-machine 36 permet à un utilisateur, notamment le maître de l'animal, d'interagir avec le système de commande 12.

L'interface homme-machine 36 est, par exemple, un écran tactile permettant à la fois à l'utilisateur de saisir des informations ou des commandes et de fournir des informations à l'utilisateur. Une telle interface homme-machine 36 cumule ainsi les fonctions d'un dispositif d'entrée et d'un dispositif de sortie.

En variante, il est utilisé un dispositif d'entrée et un dispositif de sortie distincts.

A titre d'illustration, le dispositif d'entrée est un clavier. En variante, le dispositif d'entrée est un périphérique de pointage (tel qu'une souris, un pavé tactile et une tablette graphique), un dispositif de reconnaissance vocale, un oculomètre ou un dispositif haptique.

Similairement, le dispositif de sortie peut être un écran d'affichage permettant une présentation visuelle de la sortie. Dans d'autres modes de réalisation, le dispositif de sortie est une imprimante, une unité d'affichage augmenté et/ou virtuel, un haut-parleur ou un autre dispositif générateur de son pour présenter la sortie sous forme sonore, une unité produisant des vibrations et/ou des odeurs ou une unité adaptée à produire un signal électrique.

Dans le cas de la figure 1, le système de commande 12 est implémenté physiquement en deux parties, la première partie regroupant l'unité de réception 30, l'unité de détermination 32 et l'unité d'envoi 34 et la deuxième partie correspondant à l'interface homme-machine 36

La première partie est ici un circuit électronique embarqué dans l'accessoire 10 alors que la deuxième partie est un terminal 40.

Dans le mode de réalisation décrit, la première partie est un calculateur 38.

Le calculateur 38 est un circuit électronique conçu pour manipuler et/ou transformer des données représentées par des quantités électroniques ou physiques dans des registres du calculateur 38 et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le calculateur 38 comprend un processeur monocoeur ou multicœurs (tel qu'une unité de traitement centrale (CPU), une unité de traitement graphique (GPU), un microcontrôleur et un processeur de signal numérique (DSP)), un circuit logique programmable (comme un circuit intégré spécifique à une application (ASIC), un réseau de portes programmables *in situ* (FPGA), un dispositif logique programmable (PLD) et des réseaux logiques programmables (PLA)), une machine à états, une porte logique et des composants matériels discrets.

Le calculateur 38 est relié électriquement à chacun des capteurs de l'ensemble 16 de capteurs.

En variante, il est envisageable de permettre une communication avec les capteurs par bus ou une interface d'entrée / sortie.

Dans l'exemple décrit, le terminal 40 est un ordinophone (plus souvent désigné sous l'appellation anglaise correspondante de « smartphone »).

L'ordinophone est propre à implémenter une application en communication avec le calculateur 38 via un réseau de communication.

Une application est un ensemble d'instructions du programme généralement téléchargées depuis une source externe.

Par exemple, la forme des instructions de programme est une forme de code source, une forme exécutable par ordinateur ou toute forme intermédiaire entre un code source et une forme exécutable par ordinateur, telle que la forme résultant de la conversion du code source via un interpréteur, un assembleur, un compilateur, un éditeur de liens ou un localisateur. En variante, les instructions de programme sont un microcode, des instructions firmware, des données de définition d'état, des données de configuration pour circuit intégré (par exemple du VHDL) ou un code objet.

D'autres implémentations physiques sont possibles en variante.

Par exemple, le calculateur 38 peut être déporté par rapport à l'accessoire 10. Dans un tel cas, le calculateur 38 reçoit les données de l'ensemble 16 de capteurs soit par un système filaire soit à l'aide d'antennes.

Il est également possible d'envisager que le calculateur 38 et l'interface homme-machine 36 soient réalisés sous forme d'un unique système comme une télécommande.

Il pourrait également être envisagé que le calculateur 38 soit une partie du calculateur du terminal 40. Dans un tel cas, à titre d'exemple, une application ou tout autre programme d'ordinateur pourrait effectuer les actions de l'ensemble des unités.

Un tel mode de réalisation correspond à une exécution entièrement ou partiellement réalisée sur un ordinateur unique mais il est aussi possible que l'exécution des différentes fonctions soit réalisée par un système distribué entre plusieurs ordinateurs (notamment via l'utilisation de l'informatique en nuage).

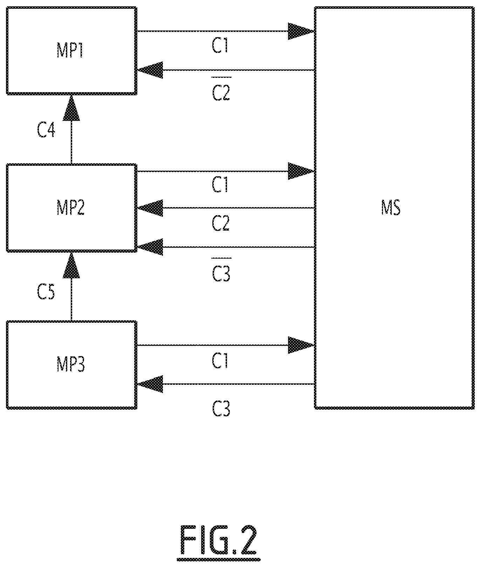

Le fonctionnement du système de commande 12 est maintenant décrit en référence à la figure 2 qui illustre un ordinogramme d'un exemple de fonctionnement d'un procédé de commande de l'accessoire 10.

Dans l'exemple décrit, le système de commande 12 est propre à commander le dispositif de pulvérisation 14 selon plusieurs modes de fonctionnement.

Par définition, un mode de fonctionnement est une loi de commande codant pour un nombre d'activations du mécanisme de pulvérisation 22 durant une durée prédéterminée et une durée pour chaque activation.

Le nombre d'activations est le nombre de fois que le mécanisme de pulvérisation 22 est déclenché durant la durée prédéterminée.

La durée d'activation est l'intervalle de temps écoulé entre le début de l'activation du mécanisme de pulvérisation 22 et la fin de l'activation du mécanisme de pulvérisation 22.

Ces différents paramètres correspondent à une posologie d'administration de l'actif à l'animal.

Le nombre d'activations et la durée de chaque activation sont propres à chaque mode de fonctionnement.

Autrement formulé, chaque mode de fonctionnement correspond à une posologie spécifique.

Les modes de fonctionnement comportent des modes de fonctionnement principaux MP1, MP2 et MP3 et au moins un mode de fonctionnement secondaire MS.

Il est rappelé ici que l'exemple décrit n'est nullement limitatif et ainsi que le nombre des modes de fonctionnement principal tout comme le nombre de mode de fonctionnement secondaire peuvent être tout nombre.

Un mode de fonctionnement principal MP1, MP2 ou MP3 est un mode de fonctionnement pour lequel la durée prédéterminée est bien supérieure à la durée d'une activation, par exemple compris entre 10 fois et 200 fois la durée d'une activation, de préférence supérieure à 100 fois la durée d'une activation.

Un mode de fonctionnement principal MP1, MP2 ou MP3 correspond donc à un traitement de fond.

Par exemple, la durée prédéterminée est de l'ordre d'une journée alors que la durée d'activation est inférieure à 1 minute.

Un mode de fonctionnement secondaire MS est un mode de fonctionnement pour lequel la durée prédéterminée est inférieure à 5 fois la durée d'une activation.

Dans l'exemple décrit, la durée prédéterminée est égale à la durée d'une activation, les deux durées étant ainsi de l'ordre d'au plus 1 minute.

Un mode de fonctionnement secondaire MS correspond ainsi à un traitement ponctuel.

Selon l'exemple décrit, sans que cela soit limitatif, les modes de fonctionnement principal MP1, MP2 et MP3 sont au nombre de trois.

Le premier mode de fonctionnement principal MP1 correspond à un nombre d'activation égal à 1, la durée prédéterminée est d'une journée et la durée d'activation est de 20 secondes.

Le premier mode de fonctionnement principal MP1 correspond ainsi à un traitement adapté pour un animal peu stressé (traitement faible).

Le deuxième mode de fonctionnement principal MP2 correspond à un nombre d'activations égal à 2, la durée prédéterminée est d'une journée et la durée d'activation est de 30 secondes.

Le deuxième mode de fonctionnement principal MP2 correspond ainsi à un traitement adapté pour un animal moyennement stressé (traitement moyen).

Le troisième mode de fonctionnement principal MP3 correspond à un nombre d'activations égal à 3, la durée prédéterminée est d'une journée et la durée d'activation est de 45 secondes.

Le troisième mode de fonctionnement principal MP3 correspond ainsi à un traitement adapté pour un animal très stressé (traitement fort).

Plusieurs observations peuvent être faites concernant ces différentes valeurs pour le nombre d'activation, la durée prédéterminée et la durée d'activation.

Ainsi, chaque mode de fonctionnement principal MP1, MP2 et MP3 correspond à un nombre d'activation propre, la différence en nombre d'activations voisins est supérieure ou égale à 1, ici égal à 1.

Chaque mode de fonctionnement principal MP1, MP2 et MP3 correspond à une durée d'activation propre, le rapport entre deux durées d'activations voisines étant compris entre 130% et 170%.

Bien entendu, ce qui vient d'être exposé n'est pas limitatif.

Par exemple, les durées d'activation de chacun des modes de fonctionnement principal MP1, MP2 et MP3 pourraient être différentes.

Typiquement, la durée d'activation du premier mode de fonctionnement principal MP1 est comprise entre 1 s et 20 s, la durée d'activation du deuxième mode de fonctionnement principal MP2 est comprise entre 10 s et 40 s et la durée d'activation du deuxième mode de fonctionnement principal MP2 est comprise entre 15 s et 1 minute ; le nombre d'activations est compris entre 1 et 5 et la durée prédéterminée est comprise entre une journée et trois jours.

Le nombre de mode de fonctionnement secondaire MS est égal à 1 dans le cas de la figure 2.

Selon l'exemple décrit, le mode de fonctionnement secondaire MS correspond à un nombre d'activation égal à 1 et une durée d'activation de 40 s.

Dans ce cas particulier, la durée d'activation et la durée prédéterminée sont confondues.

Comme indiqué précédemment, c'est l'unité de détermination 32 qui détermine quel mode de fonctionnement est approprié.

Pour cela, l'unité de détermination 32 peut être vue comme un ensemble de deux sous-unités, une première sous-unité déterminant un nombre d'activations du mécanisme de pulvérisation durant une durée prédéterminée et une deuxième sous-unité déterminant une durée pour chaque activation.

Chacune de ces deux sous-unités utilise les valeurs données par l'ensemble 16 pour déterminer la valeur de la grandeur que la sous-unité considérée calcule.

Selon l'exemple décrit, l'unité de détermination 32 utilise des critères pour basculer entre les différents modes de fonctionnement.

Les critères de basculement dépendent des données reçues.

L'unité de détermination 32 détermine si un critère portant sur les données reçues est vérifié et sélectionne le mode de fonctionnement lorsque ledit critère est vérifié.

Plus spécifiquement, l'unité de détermination 32 bascule depuis le mode de fonctionnement actuel vers un autre mode de fonctionnement si le critère vérifié correspond à la transition entre ces deux modes.

En ce sens, les critères peuvent être interprétés comme des critères de basculement. L'ensemble des critères de basculement de la figure 2 vont maintenant être détaillés.

Il est d'abord possible de basculer d'un mode de fonctionnement principal MP1, MP2 ou MP3 vers un mode de fonctionnement secondaire MS.

Cela correspond à un premier critère C1.

Le premier critère C1 correspond à déterminer que l'animal subit un stress lié à un événement pour lequel il convient de l'apaiser.

Pour déterminer l'occurrence d'un tel stress, il est utilisé les données provenant des capteurs.

A titre d'exemple particulier, le premier critère C1 est respecté si au moins un sous-critère est vérifié.

Chacun des sous-critères SC correspond à un symptôme pouvant être lié au stress ou à l'anxiété.

Un premier sous-critère SC1 est la présence d'un léchage à outrance qui pourra être détectée en fonction de l'amplitude et de la fréquence des mouvements de l'animal.

Un deuxième sous-critère SC2 est la présence de tremblements qui peut également être détectée en fonction de l'amplitude et de la fréquence des mouvements de l'animal.

Un troisième sous-critère SC3 est la présence de halètement rapide détectable en analysant l'amplitude et de la fréquence des mouvements de l'animal.

Un quatrième sous-critère SC4 est la réalisation d'aller-retour détectable en analysant la distance parcourue par l'animal, l'amplitude et la fréquence des mouvements de l'animal.

Un cinquième sous-critère SC5 est la présence d'une hyperactivité correspondante, par exemple, à un rapport de temps de repos au temps d'activité inférieur à un seuil prédéterminé.

Un sixième sous-critère SC6 correspond à l'exécution d'une destruction matérielle qui peut être détectée par l'étude de l'amplitude et de la fréquence des mouvements de l'animal.

Un septième sous-critère SC7 est la présence de cri et/ou de hurlement de l'animal (miaulement ou aboiement notamment) dépassant une intensité sonore prédéterminée.

Toute combinaison linéaire de ces sous-critères SC1 à SC7 est envisageable, y compris des combinaisons excluant certains de ces sous-critères.

Il est également envisageable d'ajouter d'autres sous-critères en fonction d'autres symptômes à détecter.

On peut aussi envisager que les sous-critères précédents utilisent un test différent pour détecter la présence du symptôme.

Il peut aussi être envisager des sous-critères liés à l'environnement. Par exemple, si le microphone 28 détecte un bruit de sirène de pompier, cela pourrait être pris en compte dans l'évaluation du premier critère C1.

Dans tous les cas, le respect du premier critère C1 implique une détection d'un événement stressant pour l'animal pour lequel l'application d'un traitement ponctuel est souhaitable.

Le basculement du mode de fonctionnement secondaire MS vers un mode de fonctionnement principal MP1, MP2 ou MP3 est géré par un deuxième critère C2 et un troisième critère C3.

Le deuxième critère C2 est utilisé si avant de basculer vers le mode de fonctionnement secondaire MS le mode de fonctionnement était le premier mode de fonctionnement principal MP1.

Le deuxième critère C2 repose sur le compte du nombre de sélections du mode de fonctionnement secondaire MS durant une durée de comptage.

A titre d'exemple, si le nombre de sélections du mode de fonctionnement secondaire MS est égal à 3 sur une journée, le deuxième critère C2 est considéré comme respecté.

Lorsque le deuxième critère C2 n'est pas respecté, l'unité de détermination 32 détermine qu'il convient de basculer dans le premier mode de fonctionnement principal MP1.

A contrario, lorsque le deuxième critère C2 est respecté, l'unité de détermination 32 détermine qu'il convient de basculer dans le deuxième mode de fonctionnement principal MP2.

Selon l'exemple décrit, chaque durée prédéterminée associé à un mode de fonctionnement principal MP1, MP2 ou MP3 et la durée de comptage sont identiques, par exemple égal à 1 journée.

Similairement, le troisième critère C3 est utilisé si avant de basculer vers le mode de fonctionnement secondaire MS le mode de fonctionnement était le deuxième mode de fonctionnement principal MP2.

Ainsi, lorsque le troisième critère C3 n'est pas respecté, l'unité de détermination 32 détermine qu'il convient de basculer dans le deuxième mode de fonctionnement principal MP2 et réciproquement, lorsque le troisième critère C3 est respecté, l'unité de détermination 32 détermine qu'il convient de basculer dans le troisième mode de fonctionnement principal MP3.

Dans le présent exemple, le deuxième critère C2 et le troisième critère C3 sont identiques.

Néanmoins, il peut être envisagé des critères différents et notamment que le nombre de sélections du troisième critère C3 soit strictement supérieur au nombre de sélections du deuxième critère C2 dans la mesure où le troisième critère C3 conduit à basculer dans un mode de fonctionnement principal MP3 correspondant à un traitement fort.

Le basculement entre deux modes de fonctionnement principal MP1, MP2 ou MP3 est géré par un quatrième critère C4 et un cinquième critère C5.

En l'occurrence, le quatrième critère C4 permet de passer du deuxième mode de fonctionnement principal MP2 au premier mode de fonctionnement principal MP1 tandis que le cinquième critère C5 permet de passer du troisième mode de fonctionnement principal MP3 au deuxième mode de fonctionnement principal MP2.

En l'espèce, les deux critères C4 et C5 sont identiques.

Les quatrième et cinquième critères C4 et C5 reposent également sur le compte du nombre de sélections du mode de fonctionnement secondaire MS durant une durée de comptage.

En l'espèce, lorsque le nombre de sélections du mode de fonctionnement secondaire MS est nul sur une journée, il y a un basculement vers le mode de fonctionnement correspondant à un traitement moins important.

Le seuil de sélections du mode de fonctionnement secondaire MS peut varier selon les cas mais sera en tout état de cause inférieur aux seuils correspondants utilisés pour les deuxième et troisième critères C2 et C3.

Il peut également être noté qu'il est interdit de basculer du premier mode de fonctionnement principal MP1 vers le troisième mode de fonctionnement principal MP3 et réciproquement.

A l'initialisation, le dispositif de commande initialise la loi de commande à un mode de fonctionnement principal MP1, MP2 ou MP3 sélectionné en fonction de deuxièmes données.

Les deuxièmes données sont des informations relatives à l'animal.

Par exemple, un questionnaire est fourni à un utilisateur et celui-ci le remplit sur le terminal 40. Le mode de fonctionnement principal MP1, MP2 ou MP3 est choisi en fonction des réponses à ces questions.

Les questions pourront porter sur la présence de symptômes, des habitudes de vie ou l'existence d'événements potentiellement traumatisants récents.

Par exemple, il pourra être demandé si l'animal a des problèmes de digestion récurrent, s'il crie beaucoup pour les symptômes.

Concernant les habitudes de vie, l'utilisateur pourra indiquer si l'animal est souvent seul ou non, le type de régime de l'animal.

Pour les événements potentiellement traumatisants récents, il peut être envisagé un champ libre ou de demander si l'utilisateur a déménagé récemment.

Il pourrait aussi être envisagé de demander la race de l'animal ou son âge pour mieux déterminer le mode de fonctionnement approprié à l'animal.

Un tel système de commande 12 permet de générer une loi de commande adaptée au comportement de l'animal.

De fait, le système de commande 12 permet de mieux détecter l'état de l'animal puisque l'état est détecté en permanence dès lors que l'animal porte l'accessoire 10.

En outre, le système de commande 12 est capable de déterminer comment apaiser au mieux l'animal en temps réel et de commander le dispositif de pulvérisation 14 pour appliquer le traitement.

D'autre modes de réalisation bénéficiant des mêmes avantages sont envisageables.

En particulier, l'ensemble 16 de capteurs peut différer.

Il sera d'abord bien compris qu'un seul capteur peut suffire pour déterminer l'état de l'animal si cela est souhaitable. A titre d'exemple, l'ensemble 16 de capteurs pourrait se réduire à un accéléromètre.

Par ailleurs, d'autres capteurs peuvent être utilisés en variante ou en complément.

Par exemple, il peut être envisagé un fréquencemètre, un tensiomètre, un système de positionnement global (plus souvent désigné sous l'abréviation GPS qui renvoie à la dénomination anglaise correspondante de « global positioning system ») ou un capteur de la température corporelle.

Ces différents capteurs ont en commun de permettre d'acquérir des mesures relatives à l'animal portant l'accessoire 10 ou à son environnement.

Selon un autre exemple, les données reçues par l'unité de réception 30 comprennent une troisième donnée relative à une activation manuelle d'un bouton, l'unité de la loi de commande sélectionnant alors un mode de fonctionnement secondaire MS en fonction de la troisième donnée.

Le bouton peut être une zone d'un écran tactile ou un bouton physique.

Cela permet à l'utilisateur d'adapter le traitement s'il le juge opportun.

En variante ou en complément, l'unité de détermination 32 peut fonctionner selon une loi de commande différente de celle qui vient d'être décrite. En particulier, il est possible d'envisager toute combinaison de modes de fonctionnement principal MPi et secondaire MSj associés entre eux par des critères Ck où i, j et k sont des nombres entiers supérieurs ou égaux à 1 qui n'ont aucune raison d'être identiques a priori.

Selon un mode de réalisation particulier, l'unité de détermination 32 est propre à apprendre la loi de commande.

L'unité de détermination 32 peut notamment comprendre les caractéristiques des modes de fonctionnement principaux MPi et secondaires MSj, leur nombre ainsi que les critères Ck.

Pour cela, l'unité de détermination 32 met en oeuvre une technique d'apprentissage machine ou artificiel, plus souvent désignée sous la dénomination anglaise correspondante de « machine learning ».

A titre d'exemple, un réseau de neurones, une technique de forêt aléatoire (plus souvent désignée sous la dénomination anglaise correspondante de « random forest »), une technique de machine à vecteur de support (plus souvent désignée par l'acronyme SVM renvoyant à la dénomination anglaise correspondante de « support vector machine ») ou des techniques bayesiennes peuvent être envisagées.

L'unité de détermination 32 pourrait, par exemple, effectuer une analyse temporelle du comportement du chien et/ou identifier des points communs entre les basculements vers un mode de fonctionnement secondaire MS.

Par exemple, certains moments de la journée peuvent être des moments à risques pour lesquels un basculement dans un mode de fonctionnement secondaire MS est indiqué.

Typiquement, le départ quotidien du maître au travail est un événement se produisant dans un intervalle de temps généralement connu et pour lequel, à titre préventif, il peut être indiqué de basculer vers un mode de fonctionnement secondaire MS.

Le système de commande 12 peut également commander la mise en oeuvre d'autres actions.

Par exemple, l'accessoire 10 pourrait comporter l'emploi d'un haut-parleur propre à diffuser des messages.

Dans un tel cas, le système de commande 12 pourrait ordonner au haut-parleur de diffuser un message préenregistré à l'animal en cas de stress. Le message préenregistré serait, par exemple, un ensemble de paroles réconfortantes du maître.

Il pourrait même être envisagé que si le ou les messages préenregistrés ne permettent pas de calmer l'animal, une alerte est envoyée au maître pour que celui-ci effectue une action, comme aller parler à l'animal.

Dans chacun des modes de réalisation, le système de commande 12 permet de mieux détecter l'état d'un animal et analyser son comportement et de déterminer comment apaiser au mieux l'animal en temps réel.

Ainsi, il a été décrit un système de commande 12 permettant de rendre l'accessoire 10 intelligent car l'utilisation du système de commande 12, de l'ensemble 16 d'au moins un capteur et du dispositif de pulvérisation 14 rend l'accessoire 10 capable de mettre en oeuvre un procédé pour apaiser un animal stressé ou traiter une anxiété de l'animal.

La présente invention concerne donc
un accessoire 10 pour animal comportant :
   - un dispositif rechargeable de pulvérisation 14 d'un actif comprenant un réservoir 18 d'actif et un corps de nébulisation 20 avec un mécanisme de pulvérisation 22 commandable,
   - un ensemble 16 d'au moins un capteur, l'ensemble 16 d'au moins un capteur étant propre à acquérir des mesures relatives à l'animal portant l'accessoire 10 ou à son environnement,
un système de commande 12 comprenant :
   - une unité de réception 30 propre à recevoir des données, lesdites données reçues par l'unité de réception 30 comprenant des premières données acquises par l'ensemble 16 d'au moins un capteur,
   - une unité de détermination 32 propre à déterminer une loi de commande du mécanisme de pulvérisation 22 en fonction des données reçues, pour obtenir une loi de commande déterminée, l'unité de détermination 32 étant propre à déterminer la loi de commande par sélection d'un mode de fonctionnement (MP1, MP2, MP3, MS) parmi une pluralité de modes de fonctionnement (MP1, MP2, MP3, MS), chaque mode de fonctionnement (MP1, MP2, MP3, MS) étant une loi de commande codant pour un nombre d'activations du mécanisme de pulvérisation (22) durant une durée prédéterminée et une durée pour chaque activation, le nombre d'activations et la durée de chaque activation étant propres à chaque mode de fonctionnement (MP1, MP2, MP3, MS),
les modes de fonctionnement (MP1, MP2, MP3) comportent des modes de fonctionnement principaux (MP1, MP2, MP3), par exemple supérieur ou égal à 3, et au moins un mode de fonctionnement secondaire (MS), un mode de fonctionnement principal (MP1, MP2, MP3) étant un mode de fonctionnement pour lequel la durée prédéterminée est supérieure à 100 fois la durée d'une activation et un mode de fonctionnement secondaire (MS) étant un mode de fonctionnement pour lequel la durée prédéterminée est inférieure à 5 fois la durée d'une activation, et
   - une unité d'envoi 34 propre à envoyer la loi de commande déterminée au mécanisme de pulvérisation 22.

Enfin, cette divulgation décrit un procédé de commande d'un accessoire 10 pour animal comportant :
- un dispositif rechargeable de pulvérisation 14 d'un actif comprenant un réservoir 18 d'actif et un corps de nébulisation 20 avec un mécanisme de pulvérisation 22 commandable,
- un ensemble 16 d'au moins un capteur, l'ensemble 16 d'au moins un capteur étant propre à acquérir des mesures relatives à l'animal portant l'accessoire 10 ou à son environnement,

le procédé de commande étant mis en oeuvre par un système de commande 12 et comprenant les étapes de :
   - réception des données, les données reçues comprenant des premières données, les premières données étant des données acquises par l'ensemble 16 d'au moins un capteur,
   - détermination d'une loi de commande du mécanisme de pulvérisation 22 en fonction des données reçues, pour obtenir une loi de commande déterminée, l'étape de détermination comprenant la sélection d'un mode de fonctionnement (MP1, MP2, MP3, MS) parmi une pluralité de modes de fonctionnement (MP1, MP2, MP3, MS), chaque mode de fonctionnement (MP1, MP2, MP3, MS) étant une loi de commande codant pour un nombre d'activations du mécanisme de pulvérisation 22 durant une durée prédéterminée et une durée pour chaque activation, le nombre d'activations et la durée de chaque activation étant propres à chaque mode de fonctionnement (MP1, MP2, MP3, MS),
les modes de fonctionnement (MP1, MP2, MP3) comportent des modes de fonctionnement principaux (MP1, MP2, MP3), par exemple supérieur ou égal à 3, et au moins un mode de fonctionnement secondaire (MS), un mode de fonctionnement principal (MP1, MP2, MP3) étant un mode de fonctionnement pour lequel la durée prédéterminée est supérieure à 100 fois la durée d'une activation et un mode de fonctionnement secondaire (MS) étant un mode de fonctionnement pour lequel la durée prédéterminée est inférieure à 5 fois la durée d'une activation, et
   - envoi de la loi de commande déterminée au mécanisme de pulvérisation 22.

## Revendications

1. Accessoire (10) pour animal comportant :
- un dispositif rechargeable de pulvérisation (14) d'un actif comprenant un réservoir (18) d'actif et un corps de nébulisation (20) avec un mécanisme de pulvérisation (22) commandable,
- un ensemble (16) d'au moins un capteur, l'ensemble (16) d'au moins un capteur étant propre à acquérir des mesures relatives à l'animal portant l'accessoire (10) ou à son environnement,
- un système de commande (12)
**caractérisé en ce que** ledit système de commande (12) comprend :
- une unité de réception (30) propre à recevoir des données, lesdites données reçues par l'unité de réception (30) comprenant des premières données acquises par l'ensemble (16) d'au moins un capteur,
- une unité de détermination (32) propre à déterminer une loi de commande du mécanisme de pulvérisation (22) en fonction des données reçues, pour obtenir une loi de commande déterminée, l'unité de détermination (32) étant propre à déterminer la loi de commande par sélection d'un mode de fonctionnement (MP1, MP2, MP3, MS) parmi une pluralité de modes de fonctionnement (MP1, MP2, MP3, MS), chaque mode de fonctionnement (MP1, MP2, MP3, MS) étant une loi de commande codant pour un nombre d'activations du mécanisme de pulvérisation (22) durant une durée prédéterminée et une durée pour chaque activation, le nombre d'activations et la durée de chaque activation étant propres à chaque mode de fonctionnement (MP1, MP2, MP3, MS),
les modes de fonctionnement (MP1, MP2, MP3) comportent des modes de fonctionnement principaux (MP1, MP2, MP3), par exemple supérieur ou égal à 3, et au moins un mode de fonctionnement secondaire (MS), un mode de fonctionnement principal (MP1, MP2, MP3) étant un mode de fonctionnement pour lequel la durée prédéterminée est supérieure à 100 fois la durée d'une activation et un mode de fonctionnement secondaire (MS) étant un mode de fonctionnement pour lequel la durée prédéterminée est inférieure à 5 fois la durée d'une activation, et
- une unité d'envoi (34) propre à envoyer la loi de commande déterminée au mécanisme de pulvérisation (22).

2. Accessoire pour animal selon la revendication 1, dans lequel l'ensemble (16) des capteurs comporte une unité de mesure du mouvement (26) comportant au moins un élément parmi un accéléromètre ou un gyroscope, les premières données comprenant une propriété d'un mouvement de l'animal, la propriété étant choisie parmi l'amplitude du mouvement de l'animal, la fréquence du mouvement de l'animal, la distance effectuée par l'animal, la direction du mouvement de l'animal ou la durée du mouvement de l'animal.

3. Accessoire pour animal selon la revendication 1 ou 2, dans lequel l'ensemble (16) des capteurs comporte un microphone (28), les premières données comprenant une propriété d'un son enregistré par le microphone (28), la propriété étant choisie parmi l'intensité acoustique du son, la fréquence sonore du son ou la durée du son.

4. Accessoire pour animal selon la revendication 1, dans lequel l'unité de détermination (32) est propre à déterminer si un critère portant sur les premières données est vérifié et est propre à sélectionner un mode de fonctionnement secondaire (MS) lorsque ledit critère est vérifié.

5. Accessoire pour animal selon la revendication 1, dans lequel l'unité de détermination (32) est propre à compter le nombre de sélections d'un mode de fonctionnement secondaire (MS) durant une durée de comptage, l'unité de détermination (32) basculant d'un mode de fonctionnement principal (MP1, MP2, MP3) à un autre mode de fonctionnement principal (MP1, MP2, MP3) en fonction du nombre de sélections comptées.

6. Accessoire pour animal selon la revendication 5, dans lequel chaque durée prédéterminée associée à un mode de fonctionnement principal (MP1, MP2, MP3) et la durée de comptage sont identiques.

7. Accessoire pour animal selon la revendication 1, dans lequel les données reçues par l'unité de réception (30) comprennent des deuxièmes données, les deuxièmes données étant des informations relatives à l'animal, l'unité de détermination (32) étant propre à initialiser la loi de commande à un mode de fonctionnement principal (MP1, MP2, MP3) sélectionné en fonction des deuxièmes données.

8. Accessoire pour animal selon la revendication 1, dans lequel les données reçues par l'unité de réception (30) comprennent une troisième donnée relative à une activation manuelle d'un bouton, l'unité de détermination (32) sélectionnant alors un mode de fonctionnement secondaire (MS) en fonction de la troisième donnée.

## Patentansprüche

1. Zubehör (10) für Tiere, umfassend:
- eine wiederaufladbare Vorrichtung zum Versprühen (14) eines Wirkstoffs, umfassend ein Wirkstoffreservoir (18) und einen Vernebelungskörper (20) mit einem steuerbaren Versprühungsmechanismus (22),
- eine Anordnung (16) des mindestens einen Sensors, wobei die Anordnung (16) des mindestens einen Sensors dazu geeignet ist, Messungen bezüglich des das Zubehör (10) tragenden Tieres oder seiner Umgebung zu erfassen,
- ein Steuersystem (12)
**dadurch gekennzeichnet, dass** das Steuersystem (12) umfasst:
- eine Empfangseinheit (30), die dazu geeignet ist, Daten zu empfangen, wobei die von der Empfangseinheit (30) empfangenen Daten erste Daten umfassen, die von der Anordnung (16) des mindestens einen Sensors erfasst werden,
- eine Bestimmungseinheit (32), die dazu geeignet ist, ein Steuerungsgesetz des Versprühungsmechanismus (22) in Abhängigkeit von den empfangenen Daten zu bestimmen, um ein bestimmtes Steuerungsgesetz zu erhalten, wobei die Bestimmungseinheit (32) dazu geeignet ist, das Steuerungsgesetz durch Auswahl eines Betriebsmodus (MP1, MP2, MP3, MS) aus einer Vielzahl von Betriebsmodi (MP1, MP2, MP3, MS) zu bestimmen, wobei jeder Betriebsmodus (MP1, MP2, MP3, MS) ein Steuerungsgesetz ist, das für eine Anzahl von Aktivierungen des Versprühungsmechanismus (22) während einer vorbestimmten Dauer und einer Dauer für jede Aktivierung kodiert, wobei die Anzahl der Aktivierungen und die Dauer jeder Aktivierung für jeden Betriebsmodus (MP1, MP2, MP3, MS) spezifisch sind,
die Betriebsmodi (MP1, MP2, MP3) umfassen Hauptbetriebsmodi (MP1, MP2, MP3), beispielsweise größer oder gleich 3, und mindestens einen Nebenbetriebsmodus (MS), wobei ein Hauptbetriebsmodus (MP1, MP2, MP3) ein Betriebsmodus ist, für den die vorbestimmte Dauer größer als das 100-fache der Dauer einer Aktivierung ist, und ein Nebenbetriebsmodus (MS) ein Betriebsmodus ist, für den die vorbestimmte Dauer kleiner als das 5-fache der Dauer einer Aktivierung ist, und
- eine Sendeeinheit (34), die dazu geeignet ist, das bestimmte Steuergesetz an den Versprühungsmechanismus (22) zu senden.

2. Zubehör für Tiere nach Anspruch 1, wobei die Anordnung (16) der Sensoren eine Bewegungsmesseinheit (26) umfasst, die mindestens ein Element aus einem Beschleunigungsmesser oder einem Gyroskop aufweist, wobei die ersten Daten eine Eigenschaft einer Bewegung des Tieres umfassen, wobei die Eigenschaft aus der Amplitude der Bewegung des Tieres, der Frequenz der Bewegung des Tieres, der vom Tier zurückgelegten Strecke, der Richtung der Bewegung des Tieres oder der Dauer der Bewegung des Tieres ausgewählt ist.

3. Zubehör für Tiere nach Anspruch 1 oder 2, wobei die Anordnung (16) der Sensoren ein Mikrofon (28) umfasst, wobei die ersten Daten eine Eigenschaft eines vom Mikrofon (28) aufgezeichneten Tons umfassen, wobei die Eigenschaft aus der akustischen Intensität des Tons, der Tonfrequenz des Tons oder der Dauer des Tons ausgewählt ist.

4. Zubehör für Tiere nach Anspruch 1, wobei die Bestimmungseinheit (32) dazu geeignet ist zu bestimmen, ob ein Kriterium bezüglich der ersten Daten erfüllt ist, und dazu geeignet ist, einen Nebenbetriebsmodus (MS) zu wählen, wenn das besagte Kriterium erfüllt ist.

5. Zubehör für Tiere nach Anspruch 1, wobei die Bestimmungseinheit (32) dazu geeignet ist, die Anzahl der Auswahloptionen eines Nebenbetriebsmodus (MS) während einer Zähldauer zu zählen, wobei die Bestimmungseinheit (32) von einem Hauptbetriebsmodus (MP1, MP2, MP3) zu einem anderen Hauptbetriebsmodus (MP1, MP2, MP3) in Abhängigkeit von der Anzahl der gezählten Auswahloptionen umschaltet.

6. Zubehör für Tiere nach Anspruch 5, wobei jede vorbestimmte Dauer, die einem Hauptbetriebsmodus (MP1, MP2, MP3) zugeordnet ist, und die Zähldauer identisch sind.

7. Zubehör für Tiere nach Anspruch 1, wobei die von der Empfangseinheit (30) empfangenen Daten zweite Daten umfassen, wobei die zweiten Daten Informationen bezüglich des Tieres sind, wobei die Bestimmungseinheit (32) dazu geeignet ist, das Steuerungsgesetz auf einen Hauptbetriebsmodus (MP1, MP2, MP3) zu initialisieren, der in Abhängigkeit von den zweiten Daten ausgewählt wird.

8. Zubehör für Tiere nach Anspruch 1, wobei die von der Empfangseinheit (30) empfangenen Daten dritte Daten bezüglich einer manuellen Aktivierung einer Taste umfassen, wobei die Bestimmungseinheit (32) dann einen Nebenbetriebsmodus (MS) in Abhängigkeit von den dritten Daten auswählt.

## Claims

1. An animal accessory (10) comprising:
- a refillable device (14) for spraying an active agent comprising an active agent container (18) and a nebulization body (20) with a controllable spray mechanism (22),
- a set (16) of at least one sensor, the set (16) of at least one sensor being able to acquire measurements relating to the animal wearing the accessory (10) or to its environment,
- a control system (12)
**characterized in that** said control system (12) comprises:
- a receiving unit (30) able to receive data, said data received by the receiving unit (30) comprising first data acquired by the set (16) of at least one sensor,
- a determination unit (32) able to determine a control law of the spray mechanism (22) on the basis of the received data, to obtain a determined control law, the determination unit (32) being able to determine the control law by selecting an operating mode (MP1, MP2, MP3, MS) from a plurality of operating modes (MP1, MP2, MP3, MS), each operating mode (MP1, MP2, MP3, MS) being a control law encoding for a number of activations of the spray mechanism (22) for a predetermined duration and a duration for each activation, the number of activations and the duration of each activation being specific to each operating mode (MP1, MP2, MP3, MS),
the operating modes (MP1, MP2, MP3) comprise main operating modes (MP1, MP2, MP3), for example greater than or equal to 3, and at least one secondary operating mode (MS), a main operating mode (MP1, MP2, MP3) being an operating mode for which the predetermined duration is greater than 100 times the duration of an activation and a secondary operating mode (MS) being an operating mode for which the predetermined duration is less than 5 times the duration of an activation, and
- a transmission unit (34) able to send the determined control law to the spray mechanism (22).

2. The animal accessory according to claim 1, wherein the set (16) of sensors comprises a motion measurement unit (26) comprising at least one of an accelerometer or a gyroscope, the first data comprising a property of a motion of the animal, the property being chosen from the amplitude of the motion of the animal, the frequency of the motion of the animal, the distance made by the animal, the direction of the motion of the animal or the duration of the motion of the animal.

3. The animal accessory according to claim 1 or 2, wherein the set (16) of sensors comprises a microphone (28), the first data comprising a property of a sound recorded by the microphone (28), the property being chosen from the sound intensity of the sound, the sound frequency of the sound or the duration of the sound.

4. The animal accessory according to claim 1, wherein the determination unit (32) is able to determine whether a criterion relating to the first data is satisfied and is able to select a secondary operating mode (MS) when said criterion is satisfied.

5. The animal accessory according to claim 1, wherein the determination unit (32) is able to count the number of selections of a secondary operating mode (MS) during a counting duration, the determination unit (32) switching from a main operating mode (MP1, MP2, MP3) to another main operating mode (MP1, MP2, MP3) on the basis of the number of selections counted.

6. The animal accessory according to claim 5, wherein each predetermined duration associated with a main operating mode (MP1, MP2, MP3) and the counting duration are identical.

7. The animal accessory according to claim 1, wherein the data received by the receiving unit (30) comprises second data, the second data being information relating to the animal, the determination unit (32) being able to initialize the control law to a main operating mode (MP1, MP2, MP3) selected on the basis of the second data.

8. The animal accessory according to claim 1, wherein the data received by the receiving unit (30) comprises a third item of data relating to a manual activation of a button, the determination unit (32) then selecting a secondary operating mode (MS) on the basis of the third item of data.
